# EUROPEAN PATENT SPECIFICATION

(11) **EP 3 541 978 B1**
(45) Date of publication and mention of the grant of the patent: **04.05.2022**
(21) Application number: 17811381.7
(22) Date of filing: 13.11.2017
(51) Int. Cl.: B29C 41/20, B29C 65/30, B29C 65/00, B29L 31/48, D06B 1/10, B29C 65/18, D06C 5/00

(54) **MACHINE AND PLANT FOR APPLYING POLYMERIC MATERIAL TO A MANUFACTURED TUBULAR ARTICLE**
MASCHINE UND ANLAGE ZUM AUFBRINGEN VON POLYMERMATERIAL AUF EINEN HERGESTELLTEN ROHRFÖRMIGEN ARTIKEL
MACHINE ET INSTALLATION PERMETTANT D'APPLIQUER UN MATÉRIAU POLYMÈRE SUR UN ARTICLE TUBULAIRE FABRIQUÉ

(30) Priority: 18.11.2016 IT 201600116966
(43) Date of publication of application: 25.09.2019
(73) Proprietor: Boggiani Renato S.r.l., 46042 Castel Goffredo (MN) (IT)
(72) Inventor: BOGGIANI, Francesco, Castel Goffredo (MN) (IT)
(74) Representative: PGA S.p.A.
(86) International application number: PCT/IB2017/057078
(87) International publication number: WO 2018/092014

(56) References cited:
- WO-A1-2016/116834
- GB-A- 2 258 135

## Description

The object of the present invention is a machine for applying polymeric material to a manufactured tubular article according to the preamble of claim 1, wherein the polymeric material is inserted in the machine as an application on a support belt. A further object of the present invention is a plant for applying a polymeric material to a manufactured tubular article.

Once it has been put on, a manufactured tubular article made of a textile material, such as tights for example, may need to be kept stably in position, thus ensuring adequate adherence. In particular, in the case of the so-called "self-supporting" stockings, these stockings must remain tightly adherent to the legs, permitting the wearer to perform any type of movement without the risk of the stockings moving with respect to the position in which they were put on and forming creases as a result, which affect comfort and their aesthetic appearance. For this purpose, the upper portion of self-supporting stockings (that is, the portion having the largest diameter) can comprise one or more bands or strips of flexible elastic material (typically applied to the band called the "welt"), this material being characterized by a high degree of adherence to the skin. Once the stockings have been put on, the material thus prevents them from sliding or slipping off undesirably. Application of silicone or more generally a polymeric material to the welts of self-supporting stockings is a known practice, and it is applied to the manufactured tubular article following the knitting process, by means of specific machines.

Moreover, there are known machines that perform the process of applying the polymeric material to the inner surface of a portion of a manufactured tubular article, that utilize polyurethane in particular as the process material, and that employ a technology according to which the polyurethane with which these machines are supplied is conveyed by means of a support belt. The polyurethane is detached from the support belt, typically by administering heat, and it is thus transferred to the textile article, thereby forming non-slip strips on its inner surface.

In a first technical solution of the prior art, the textile article (e.g. a stocking) is laid out and arranged in a perfectly flat shape. One then proceeds with a first application of polyurethane by means of a heated head that presses the belt with the material against the textile article. The shape is then rotated by 180°, after which one proceeds with a second application of polyurethane.

In a second technical solution of the prior art, the support belt (bearing the polyurethane) is wound about the textile article while a jet of hot air flows against it, which melts the polyurethane, and thereby transferring the material to the stocking.

Objective drawbacks have been reported for these technical solutions. In fact, the first technical solution realizes non-slip strips that have - along their annular extension - two gaps that are spaced away from each other by 180°. Though limited in breadth, these gaps markedly reduce the capacity of the strips to ensure adherence of the stocking to the skin. The second technical solution instead realizes non-slip strips that can offer poor adhesion to the fabric. In fact, given that the polyurethane is heated and transferred to the fabric, but not pressed, the effectiveness of the bands is limited as concerns their capacity to ensure adherence of the stocking to the skin.

The aim of the present invention is to overcome the objective drawbacks cited hereinabove.

In particular, an aim of the present invention is to realize a machine and a plant comprising this machine which are capable of applying polymeric material to a manufactured tubular article effectively, thus rendering the manufactured tubular article free of problems involving poor adherence once it has been put on.

A further aim of the present invention is to realize a machine and a plant comprising this machine which are particularly fast and efficient and which thus make it possible to markedly increase the number of manufactured tubular articles treated in a predetermined period of time while also reducing treatment-related costs.

Lastly, an aim of the present invention is to realize a machine and a plant comprising this machine which are highly automated and capable of ensuring maximum repeatability of the performances thereof, thus ensuring the same high quality standard for the entire amount of manufactured tubular articles treated.

A particular aim of the present invention is to realize a machine and a plant comprising this machine which are characterized by innovative operation with respect to the prior art.

These aims are fully achieved by the present invention, which comprises a plurality of aspects that are listed herein below.

A general aspect of the invention relates to a machine for applying polymeric material to a manufactured tubular article, said polymeric material being inserted in said machine in the form of an application on a support belt (that is, as a continuous strip of polymeric material borne by a support belt), said polymeric material preferably being polyurethane and said manufactured tubular article preferably being a textile article. In a first aspect of the machine, the machine comprises:
- a support for said manufactured tubular article;
- a head configured to melt said polymeric material so as to enable the application thereof on said manufactured tubular article, said head comprising a work surface, the geometry of the work surface of said head being compatible with the geometry of the external surface of said support, said work surface of said head preferably being complementarily shaped to the external surface of said support;
- a first movement system, suitable for moving said head in such a manner that said head can take on at least one position for detachment from said support (or distanced position) and at least one position of adjacency to said support (or close position) and
- a second movement system, suitable for moving said belt along a predefined path, said path comprising a section interposed between said support and said head.

According to this first aspect of the invention, the work surface of said head is a curved surface.

A curved surface is understood as a non-planar surface, for example a cylindrical surface portion.

Other examples of machines are known.

Document WO 2016/116834 A1 describes an apparatus for the formation of non-slip portions on garments, the apparatus comprising: a support having a mobile engagement surface for a garment; a reel holder for a reel of a tape comprising a support layer and a layer of non-slip material; an application device connected to the reel holder and selectively engageable against the mobile surface and against the garment for applying the layer of non-slip material onto said garment. The reel holder and the application device define at least in part a feeding path and feeding direction of the tape unwound from the reel. The apparatus further comprises a cutting device interposed between the reel holder and the application device; the cutting device acts along a parallel direction to a longitudinal extension of the tape and is configured to longitudinally divide the tape into parallel strips while the tape advances along the feeding path and before it reaches the application device.

A second aspect of the invention, which is dependent on the first aspect, relates to a machine for applying polymeric material to a manufactured tubular article, wherein the external surface of said support and the work surface of said head share a same plane of symmetry. The form of the work surface of the head preferably corresponds to a portion of the external surface of the support.

A third aspect of the invention, which is dependent on the second aspect, relates to a machine for applying polymeric material to a manufactured tubular article, wherein the external surface of said support has a substantially circular section (or it is substantially cylindrical in form) and the work surface of said head has a section substantially in the form of an arc of a circle (or it is substantially in the form of a cylindrical surface portion).

A fourth aspect of the invention, which is dependent on the third aspect, relates to a machine for applying polymeric material to a manufactured tubular article, wherein the external surface of said support and the work surface of said head have substantially the same radius of curvature.

A fifth aspect of the invention, which is dependent on the third aspect or on the fourth aspect, relates to a machine for applying polymeric material to a manufactured tubular article, wherein the amplitude of the angle defined by said arc of a circle is comprised between 30° and 180°, preferably comprised between 90° and 150°, more preferably comprised between 120° and 140°, and even more preferably equal to about 130°.

A sixth aspect of the invention, which is dependent on any aspect between the second aspect and the fifth aspect, relates to a machine for applying polymeric material to a manufactured tubular article, wherein said first movement system is configured to move said head with translational motion and wherein the translational movement of said head from said position for detachment to said position of adjacency and the translational movement of said head from said position of adjacency to said detachment position take place along a direction substantially parallel to said plane of symmetry.

A seventh aspect of the invention, which is dependent on any one of the preceding aspects, relates to a machine for applying polymeric material to a manufactured tubular article, wherein:
- said second movement system comprises at least a first roller and a second roller;
- said first roller and said second roller delimit the section of the path of said belt interposed between said support and said head and they are connected to a structure that is solidly constrained to said head by means of a first arm and a second arm, respectively;
- said first arm and said second arm are articulated by means of a first hinge and a second hinge, respectively, and
- said first hinge and said second hinge enable a predefined rotation of said first arm and of said second arm, respectively.

An eighth aspect of the invention, which is dependent on the seventh aspect, relates to a machine for applying polymeric material to a manufactured tubular article, wherein said first hinge is configured in such a manner that said first arm can take on at least one resting position and at least one working position, the distance between said first roller and said head in said resting position of said first arm being greater than the distance between said first roller and said head in said working position of said first arm, and wherein said second hinge is configured in such a manner that said second arm can take on at least one resting position and at least one working position, the distance between said second roller and said head in said resting position of said second arm being greater than the distance between said second roller and said head in said working position of said second arm.

A ninth aspect of the invention, which is dependent on the eighth aspect, relates to a machine for applying polymeric material to a manufactured tubular article, wherein said first movement system and said second movement system are configured in such a manner that said first arm and said second arm are found in their respective resting positions when said head is found in said detachment position and in their respective working positions when said head is found in said position of adjacency.

A tenth aspect of the invention, which is dependent on the eighth aspect or on the ninth aspect, relates to a machine for applying polymeric material to a manufactured tubular article, wherein the passage of said first arm and of said second arm from their respective resting positions to their respective working positions takes place, preferably simultaneously, by virtue of a drawing force exerted by said second movement system on said belt.

An eleventh aspect of the invention, which is dependent on any aspect between the eighth and the tenth aspect, relates to a machine for applying polymeric material to a manufactured tubular article, wherein the switching of said first arm and of said second arm from their respective working positions to their respective resting positions takes place, preferably simultaneously, by virtue of an elastic force exerted on said first arm and on said second arm by respective thrust springs (or similar elastic elements).

A twelfth aspect of the invention, which is dependent on any one of the preceding aspects, relates to a machine for applying polymeric material to a manufactured tubular article, wherein, when said head is found in said position of adjacency, at least a fraction of the section of the belt interposed between said support and said head is pressed by the work surface of said head against the external surface of said support (or wherein, when said head is found in said position of adjacency, at least a fraction of the section of the belt interposed between said support and said head is locked between the work surface of said head and the external surface of said support).

A thirteenth aspect of the invention, which is dependent on any one of the preceding aspects, relates to a machine for applying polymeric material to a manufactured tubular article, wherein said support and said head are removable and/or interchangeable.

A fourteenth aspect of the invention, which is dependent on any one of the preceding aspects, relates to a machine for applying polymeric material to a manufactured tubular article, wherein said support is connected to a shaft and said support can rotate about the axis of said shaft.

A fifteenth aspect of the invention, which is dependent on the fourteenth aspect, relates to a machine for applying polymeric material to a manufactured tubular article, wherein said support can take on a discrete number of stable angular positions, the stable angular positions of said support being substantially angularly equidistant with respect to each other.

A sixteenth aspect of the invention, which is dependent on the fifteenth aspect, relates to a machine for applying polymeric material to a manufactured tubular article, wherein the number of stable angular positions of said support is equal to three or greater than three.

A seventeenth aspect of the invention, which is dependent on any one of the preceding aspects, relates to a machine for applying polymeric material to a manufactured tubular article, wherein the work surface of said head is smooth or wherein ridges and/or grooves are afforded on the work surface of said head according to a predetermined pattern.

An eighteenth aspect of the invention, which is dependent on any one of the preceding aspects, relates to a plant for applying polymeric material to a manufactured tubular article, comprising a plurality of machines arranged in series, the work surface of the head of each machine having a section substantially in the form of an arc of a circle.

According to this eighteenth aspect of the invention, there is a number P of said machines so that, S being the amplitude, expressed in degrees, of the angle defined by each arc of a circle, the parameter P*S/360
is comprised between 1 and 1.5, preferably between 1 and 1.2, and even more preferably between 1 and 1.1. A nineteenth aspect of the invention, which is dependent on the eighteenth aspect, relates to a plant for applying polymeric material to a manufactured tubular article, wherein the number of machines is equal to three or greater than three.

A twentieth aspect of the invention, which is dependent on the eighteenth aspect or on the twentieth aspect, relates to a plant for applying polymeric material to a manufactured tubular article, wherein said plant is configured in such a manner that the heads of the machines take on their respective detachment and adjacency positions virtually simultaneously.

A twenty-first aspect of the invention, which is dependent on any aspect between the eighteenth aspect and the twentieth aspect, relates to a plant for applying polymeric material to a manufactured tubular article, wherein said plant comprises a system for advancing the supports that is suitable for enabling any one of these supports to work progressively in combination with all the machines in said plant.

A twenty-second aspect of the invention, which is dependent on the twenty-first aspect, relates to a plant for applying polymeric material to a manufactured tubular article, wherein said advancement system is configured to alternate phases for advancement of the supports with phases for stopping the supports and to switch the position of each head from the respective position for detachment to the respective adjacency position during said stopping phases.

A twenty-third aspect of the invention, which is dependent on the twenty-first or the twenty-second aspect, relates to a plant for applying polymeric material to a manufactured tubular article, wherein said plant comprises a drive chain and a pair of rails, wherein each support is transported by a respective carriage, each carriage being equipped with means for engaging a link in said chain and guiding means that can slide along said rails.

A twenty-fourth aspect of the invention, which is dependent on the twenty-second aspect or on the twenty-third aspect, relates to a plant for applying polymeric material to a manufactured tubular article, wherein during the phases for advancement of the supports, the supports rotate about their own axis.

A twenty-fifth aspect of the invention, which is dependent on the twenty-fourth aspect, relates to a plant for applying polymeric material to a manufactured tubular article, wherein, in the course of the advancement from one machine to the next, the supports undergo a rotation by degrees equal to (360/P)+(360*V), where P is the number of machines in said plant and V is any whole number greater than or equal to zero.

A twenty-sixth aspect of the invention, which is dependent on the twenty-fourth aspect or on the twenty-fifth aspect, relates to a plant for applying polymeric material to a manufactured tubular article, wherein a respective flywheel is associated with each support, each flywheel being substantially coaxial with the support with which it is associated, and wherein said plant comprises a bar, each flywheel rolling frictionally along said bar.

A twenty-seventh aspect of the invention, which is dependent on any aspect between the eighteenth aspect and the twentieth-sixth aspect, relates to a plant for applying polymeric material to a manufactured tubular article, wherein said plant comprises, upstream of the machines, a station for the automatic loading of manufactured tubular articles on the supports and, downstream of the machines, a station for the automatic retrieval of the manufactured tubular articles from the supports.

In one aspect of the present invention, said polymeric material is preferably polyurethane or silicone.

In one aspect of the present invention, said polymeric material - applied to a textile article - has non-slip or clinging or adhesive features, particularly in contact with the skin of a user of the textile article to which it is applied.

In one aspect, the machine of the present invention is configured to apply said polymeric material in the form of a strip, or belt, or band or line that is preferably ring-shaped. In one aspect, said strip is solid, that is, continuous, or it is made up of a number of successive portions.

All the aspects listed here, together with further aspects of the invention, shall become clearer following the description of an embodiment of the invention which refers to the following figures:
- Figure 1 illustrates a plant for applying polymeric material to a manufactured tubular article according to a possible embodiment in accordance with the present invention;
- Figure 2 illustrates several components of the plant appearing in Figure 1;
- Figure 3 illustrates a machine for applying polymeric material to a manufactured tubular article according to a possible embodiment in accordance with the present invention;
- Figure 4A illustrates the interfacing of the support with the head of the machine appearing in Figure 3, when the head takes on the position for detachment from the support;
- Figure 4B illustrates the interfacing of the support with the head of the machine appearing in Figure 3, when the head takes on the position of adjacency to the support;
- Figure 5 is a detailed axonometric view of the head of the machine appearing in Figure 3;
- Figure 6A is a first detailed axonometric view of the support of the machine appearing in Figure 3;
- Figure 6B is a second detailed axonometric view of the support of the machine appearing in Figure 3;
- Figure 7 is an axonometric view of a detail of the plant appearing in Figure 1;
- Figure 8 is an axonometric view of a detail of the plant appearing in Figure 1 when a manufactured tubular article is loaded on the support and
- Figure 9 illustrates a support belt on which the polymeric material is applied, both before and after use in the machine appearing in Figure 3.

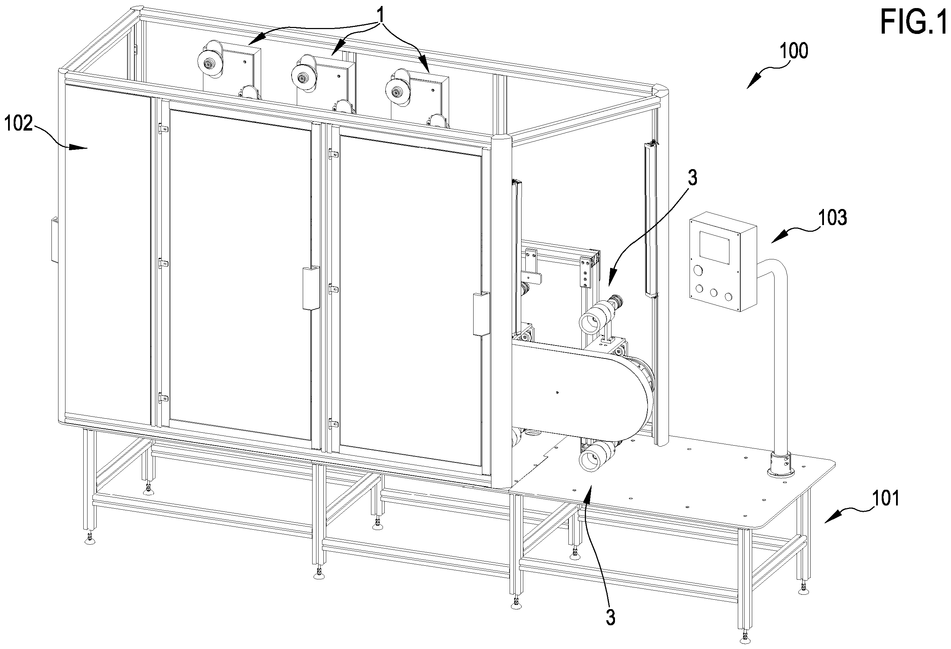

A plant 100 according to the present invention is illustrated in Figure 1 by way of example. This plant 100 is apt for applying polymeric material 9' in the form of one or more bands or strips to a manufactured tubular article 9, typically made of fabric (such as nylon for example). The plant 100 can operate on tights, stockings, shirtsleeves, sweaters or jackets, on bands and in general on any tubular textile article, preferably at an open end of the manufactured tubular article. One very advantageous use of the plant 100 comprises its employment for applying one or more non-slip circular strips to the so-called "self-supporting stockings" on the so-called "wefts" thereof. These non-slip (or clinging) strips enable the self-supporting stockings, when worn, to support themselves without the use of a garter and thus to offer a high degree of practicality.

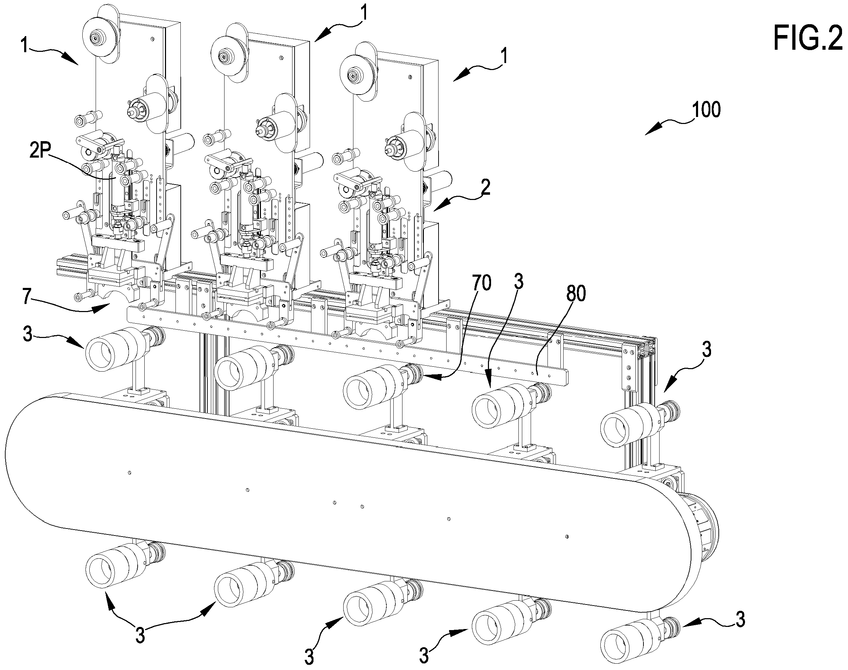

The same plant 100 of Figure 1 is shown in Figure 2, where several components are transparent so as to provide better visibility of specific components of the system 100. The components that are transparent in Figure 2, but which are clearly visible in Figure 1, are for example the supporting and rest base 101, the access and protection setup 102 and the interface 103 for controlling and monitoring the plant 100.

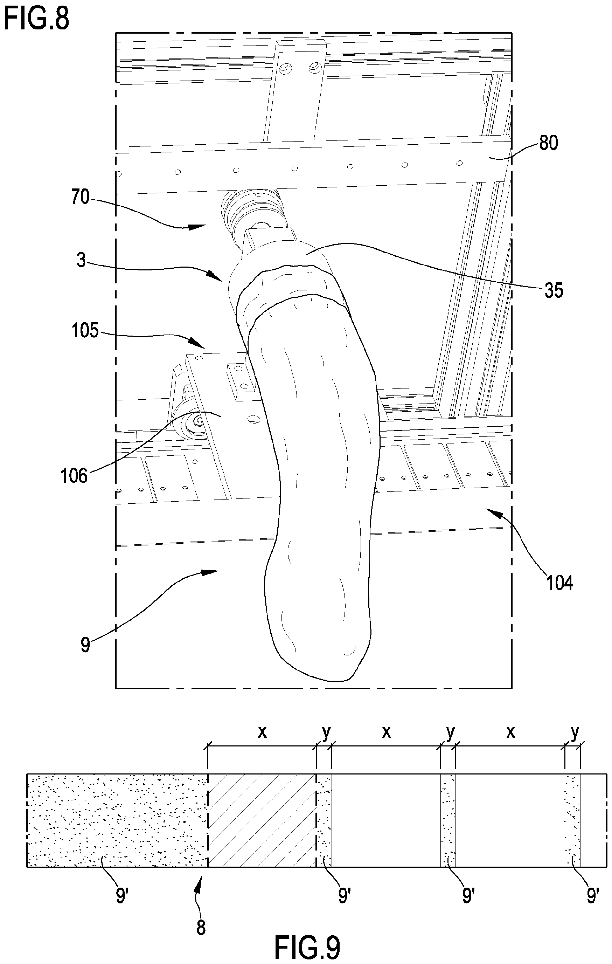

In the embodiment of the present invention illustrated in Figure 1 and Figure 2, by way of non-limiting explanation, the plant 100 according to the present invention comprises three machines 1 for applying polymeric material 9' (preferably polyurethane) to a manufactured tubular article 9 (preferably a textile article). The three machines 1 are identical to each other, arranged in series and share a plurality of supports 3 for the manufactured tubular articles 9.The supports 3 move along a rectilinear track 104, this movement being controlled so as to stop the supports 3 first in a first station (situated at the first machine 1), then in a second station (situated at the second machine) and lastly in a third station (situated at the third machine 1).In the detail view of the plant 100 shown in Figure 8, it is possible to observe how a manufactured tubular article 9, for example a nylon self-supporting stocking, is applied to any one of the supports 3. The manufactured tubular article is applied to the support 3 inside out, so that the polymeric material 9' is applied on the inner surface of the manufactured tubular article 9. The number of machines 1 in the plant 100 (equal to three in the example embodiment of the present invention appearing in Figure 1 and in Figure 2) is defined in the stage of designing the plant 100, based on how one intends to organize the application process that the plant 100 will be performing.

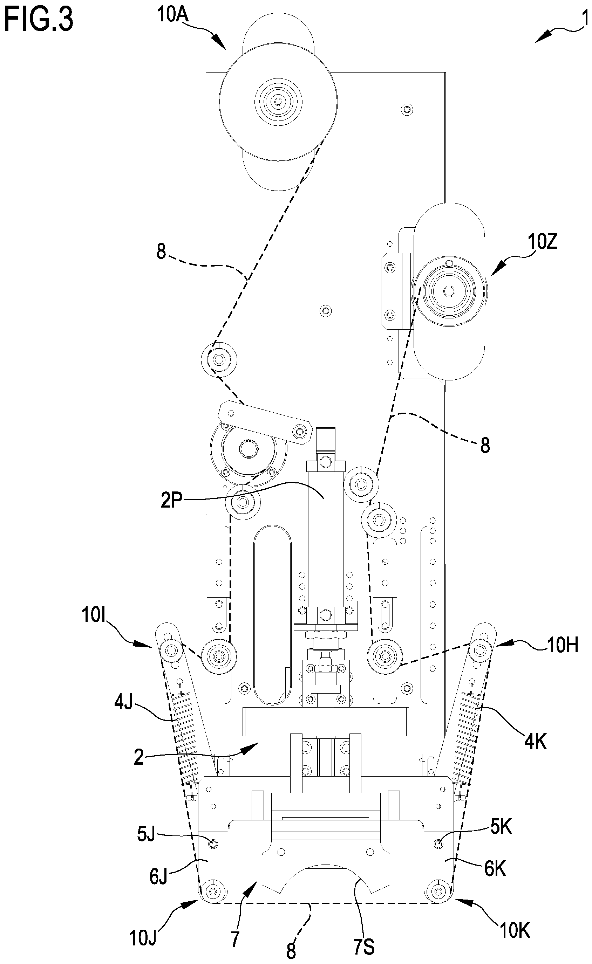

A front view of a machine 1 for applying polymeric material 9' (preferably polyurethane) to a manufactured tubular article 9 (preferably a textile article) is shown in Figure 3. This machine 1 can be any one of the machines 1 installed in the plant 100 appearing in Figure 1, but it should be noted that it can also be installed in a single-station plant and in general, it can be utilized singly. The machine 1 is configured so as to carry out the process of applying polymeric material 9', the latter having been inserted in the machine 1 as an application on a support belt 8.

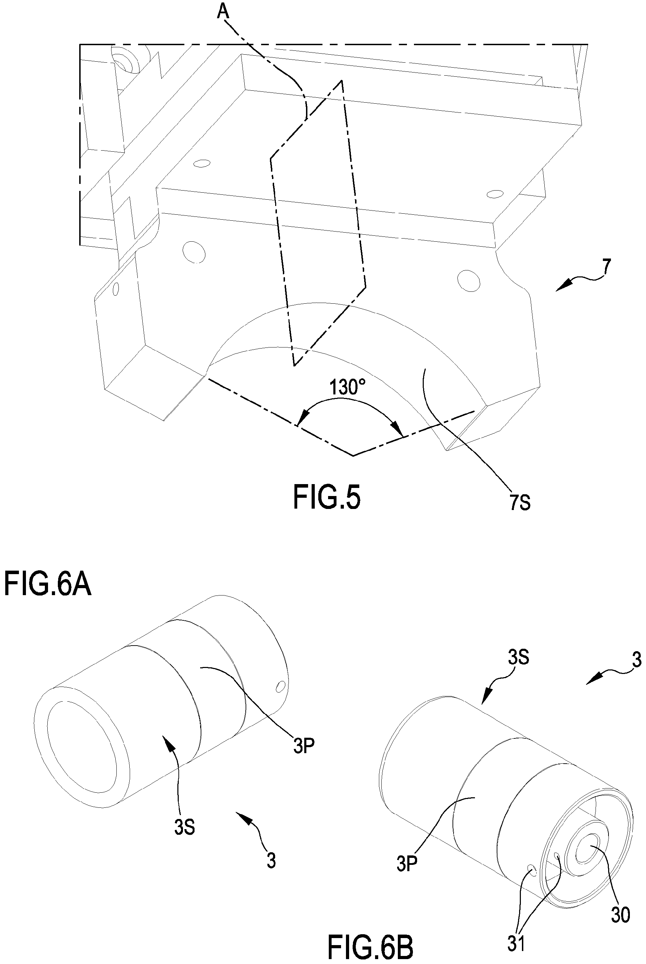

The machine 1 comprises a support 3 (not illustrated in Figure 3, but shown in Figure 6A and in Figure 6B in two different axonometric views) and said support 3 is configured to support a manufactured tubular article 9. Advantageously, the support 3 is realized in the form of an axisymmetric body, particularly a cylindrical body with a substantially circular section. As the support 3 must stably retain the manufactured tubular article 9 during the various stages of the process of applying polymeric material 9', at least one portion of the external surface 3S of the support 3 should have adequate roughness and/or an adequate friction coefficient, in order to prevent the manufactured tubular article 9 from slipping off the support 3 or in any case, from moving in an undesirable manner. To give the coupling of the support 3 and the manufactured tubular article 9 the desired stability, a portion of the external surface 3S of the support 3 is advantageously covered with a band 3P of material that has a high friction coefficient (as shown in Figure 6A and in Figure 6B); for example this band 3P can be obtained by covering the portion of interest of the external surface 3S of the support 3 with a layer of material that is capable of ensuring the desired degree of friction. Advantageously, the support 3 is connected to a shaft, preferably connected to an electric motor, so as to be able to rotate about the axis of this shaft. The seat 30 for housing the shaft and the slots 31 for passage of a key for locking the support 3 to the shaft are clearly shown in Figure 6B. Advantageously, the support 3 can take on a discrete number of stable angular positions (for example three stable angular positions), the stable angular positions of the support 3 being substantially angularly equidistant with respect to each other (therefore with an angular distance substantially equal to 120° in the case in which three stable angular positions are provided).

The machine 1 comprises a head 7 (shown in detail in Figure 5) configured to heat and/or melt the polymeric material 9' so as to enable its detachment from the belt and its application on the manufactured tubular article 9. The head 7 comprises a work surface 7S, the geometry of which is compatible with the geometry of the external surface 3S of the support 3. Preferably, the work surface 7S is complementarily shaped to the external surface 3S of the support. The work surface 7S is preferably symmetric with respect to a plane of symmetry A. As the function of the head 7 inside the machine 1 is that of melting the polymeric material 9' so as to cause its detachment from the support belt 8 and thus its transferral to the manufactured tubular article 9, this head 7 is advantageously a heating head, equipped with means for heating the manufactured tubular article 9, for example one or more electric resistors arranged in direct contact with the work surface 7S. The work surface 7S of the head 7 can be smooth or ridges and/or grooves can be afforded on the work surface 7S of the head 7 according to a predetermined pattern. For example, the work surface 7S of the head 7 can be shaped so as to obtain a fret or a pattern on the surface of the weft or of the border of the manufactured tubular article.

The machine 1 comprises a first movement system, suitable for moving the head 7 in such a manner that the head 7 can take on at least one position for detachment from the support 3 and at least one position of adjacency to the support 3. Advantageously, the first movement system is configured to move the head 7 with translational motion from the position for detachment to the position of adjacency and vice versa, the translational movement of the head 7 from the position for detachment to the position of adjacency and the translational movement of the head 7 from the position of adjacency to the detachment position taking place along a direction substantially parallel to the plane of symmetry A of the work surface 7S of the head 7. Advantageously, the first movement system enables the head 7 to move in translational motion with respect to the frame 2 of the machine 1, so as to move closer to the support 3 or to move away from the support 3. Advantageously, the first movement system comprises a prismatic pair, a first element of the pair being solidly constrained to the frame 2 of the machine 1, a second element of the pair being solidly constrained to the head 7. Advantageously, the first movement system is equipped with a pneumatic oil-dynamic or hydraulic actuator, for example with a pneumatic cylinder 2P supplied with compressed air; this actuator realizes said prismatic pair.

The machine 1 preferably comprises a second movement system, suitable for moving, according to a predefined path, the belt 8 on which the polymeric material 9' to be applied on the manufactured tubular article 9 is applied. The path for the belt 8 (indicated in Figure 3 by means of a dashed line) is defined by a series of rollers that are part of the second movement system and the series starts with an unwinding roller 10A and ends with a winding roller 10Z. A motor is coupled to one of these rollers and it exerts an adequate drawing force on the belt 8, whereas the other rollers are preferably idler rollers and they are thus set into rotation about the respective axes by the drawing force drawing the belt 8.The path of the belt 8 comprises a section interposed between the support 3 and the head 7.This section is advantageously substantially perpendicular to the plane of symmetry A of the work surface 7S and it is delimited by a first roller 10J and by a second roller 10K, which are connected to a structure that is solidly constrained to the head 7, by means of a first arm 6J and a second arm 6K, respectively. Advantageously, immediately upstream of the first roller 10J (in the direction of travel of the belt 8), there is a third roller 101 and immediately downstream of the second roller 10K (again, in the direction of travel of the belt 8), there is a fourth roller 10H, the third roller 101 and the fourth roller 10H being connected (they move in translational motion) to the frame 2 of the machine 1.

According to the present invention, the work surface 7S of the head 7 is a curved surface, particularly a surface that is concave so as to achieve a form coupling with the external surface 3S of the support 3. Advantageously, together with the arrangement of the support 3 and the head 7 of the machine 1, this form coupling acts in such a manner that the plane of symmetry A of the work surface 7S of the head is also a plane of symmetry A for the external surface 3S of the support 3. Advantageously, as the external surface 3S of the support 3 has a substantially circular section, the work surface 7S of the head 7 has a section substantially in the form of an arc of a circle. Advantageously, the external surface 3S of the support 3 and the work surface 7S of the head 7 have substantially the same radius of curvature, so that in the position of adjacency of the head 7, the external surface 3S of the support 3 and the work surface 7S of the head 7 are adequately in contact with each other.

Advantageously, the machine 1 as in the embodiment of the present invention illustrated in Figure 3 (the same can be said for each one of the machines 1 installed in the plant 100 as in the embodiment of the present invention illustrated in Figure 1 and in Figure 2) is configured to apply a strip to the inner surface of a self-supporting stocking by means of three partial applications of polymeric material 9' and to act in such a manner that the joining of the partial applications creates a continuous strip that does not present any discontinuity. Therefore, the arc of a circle defined by the work surface 7S of the head 7 should be slightly greater than 120°, so that by carrying out three applications of polymeric material 9' and rotating the support 3 by about 120° between one application and the next, a perfectly continuous strip proves to have been applied on the manufactured tubular article 9 upon completion of the three applications.

Advantageously, the amplitude of the angle defined by the work surface 7S of the head is comprised between 120° and 180°, preferably comprised between 121° and 150° and even more preferably equal to about 130°. Obviously, by increasing the number of applications provided for the formation of the continuous strip on the inner surface of the stocking, the amplitude of the angle defined by the work surface 7S of the head 7 is decreased accordingly (for example, it is slightly greater than 90° in the case of four applications or slightly greater than 72° in the case of five applications).

Advantageously, both the support 3 and the head 7 are removable and/or interchangeable, so as to enable the machine 1 according to the present invention to work with manufactured tubular articles 9 of different dimensions. For this purpose, the support 3 can be attached or detached from the shaft to which it is coupled by engaging or disengaging the key from its seat. The machine 1 is instead provided with replacement means, by means of which a head 7 can be disengaged from the machine 1 and a new head 7 can then be engaged to the latter, said new head 7 having a work surface 7S that is more or less extended with respect to the head 7 that has been replaced, according to needs. Therefore, the machine 1 is designed to use heads 7 and supports 3 with larger diameters when the diameter of the manufactured tubular article 9 is larger, and heads 7 and supports 3 with smaller diameters when the diameter of the manufactured tubular article 9 is smaller. The machine 1 for applying polymeric material 9' to a manufactured tubular article 9 according to the present invention operates according to a predetermined cycle based on which a pre-established advancement of the belt 8 takes place first (the head 7 remaining in the detachment position), the head 7 then switches its position from the position for detachment to the position of adjacency and remains in that position for a pre-established amount of time that is sufficient to melt the polymeric material 9' and then transfer it from the belt 8 to the manufactured tubular article 9 positioned on the support 3, after which the head 7 switches its position again, returning into the position for detachment, and lastly, the belt 8 is advanced again so as to be ready for the next application of polymeric material 9'.When the head 7 is found in the position of adjacency, a fraction of the section of the belt 8 interposed between the support 3 and the head 7 is pressed by the work surface 7S of the head 7 against the external surface 3S of the support 3.

Preferably, the portion of the support 3 provided with said band 3P is configured to facilitate stable application of the polymeric material to the manufactured tubular article. In particular, the band 3P can be made of a sponge material, or generally of a yielding or pressable material, so that when the head 7 presses on the support 3 and the belt is pressed on the manufactured tubular article, penetration of the heated polymeric material in the fabric constituting the manufactured tubular article is facilitated.

Upon completion of the application of the polymeric material 9', performing a procedure for recovery of the belt 8 simultaneously with the return of the head 7 in the detachment position is particularly advantageous; said recovery procedure serves to compensate for the difference in the length of the belt 8 comprised between the first roller 10J and the second roller 10K which would occur between when the head 7 is found in the detachment position (in the detachment position of the head 7, the belt 8 follows a rectilinear path between the first roller 10J and the second roller 10K) and when the head 7 is instead found in the position of adjacency (in the detachment position of the head 7, the belt 8 follows a curvilinear path between the first roller 10J and the second roller 10K, as it is forced to be interposed between the work surface 7S of the head 7 and external surface 3S of the support 3). This recovery procedure is carried out by changing the position of the first roller 10J and the second roller 10K, so that the first roller 10J and the second roller 10K are found at a shorter distance from the support 3 and from the head 7 when the head 7 is found in the position of adjacency with respect to when the head 7 is found in the detachment position.

In preparation for said procedure for recovery of the belt 8, a first hinge 5J and a second hinge 5K enable a predefined rotation of the first arm 6J and the second arm 6K, respectively. The first roller 10J and the second roller 10K thus have the possibility of rotating, both with a predefined range of travel (advantageously, substantially with the same range of travel) with respect to the head 7.The first hinge 5J is thus configured in such a manner that the first arm 6J can take on a resting position and a working position, the distance between the first roller 10J and the head 7 in the resting position of the first arm 6J being greater than the distance between the first roller 10J and the head 7 in the working position of the first arm 6J. Likewise, the second hinge 5K is configured in such a manner that the second arm 6K can take on a resting position and a working position, the distance between the second roller 10K and the head 7 in the resting position of the second arm 6K being greater than the distance between the second roller 10K and the head 7 in the working position of the second arm 6K. To enable the procedure for recovery of the belt 8, the first movement system and the second movement system are configured in such a manner that the first arm 6J and the second arm 6K are found in their respective resting positions when the head 7 is found in the detachment position, and in their respective working positions when the head 7 is found in the position of adjacency. It should also be noted that the first roller 10J and the second roller 10K are solidly constrained to the head 7, so that they move along the direction of translational movement of the head 7 during the switching of the latter from the detachment position to the position of adjacency and vice versa.

Advantageously, the first arm 6J is connected, particularly by means of a first appendage integral with the first arm 6J, to an end of a first spring 4J, the remaining end of which is secured to a first slot integral with the frame 2 of the machine 1, particularly afforded close to the third roller 101. The first spring 4J is arranged in such a manner as to oppose the rotations of the first arm 6J about the first hinge 5J which tend to bring the first roller 10J closer to the head 7. Likewise, the second 6K is connected, particularly by means of a second appendage integral with the second arm 6K, to an end of a second spring 4K, the remaining end of which is secured to a second slot integral with the frame 2 of the machine 1, particularly afforded close to the fourth roller 10H. The second spring 4K is arranged in such a manner as to oppose the rotations of the second arm 6K about the second hinge 5K which tend to bring the second roller 10K closer to the head 7.

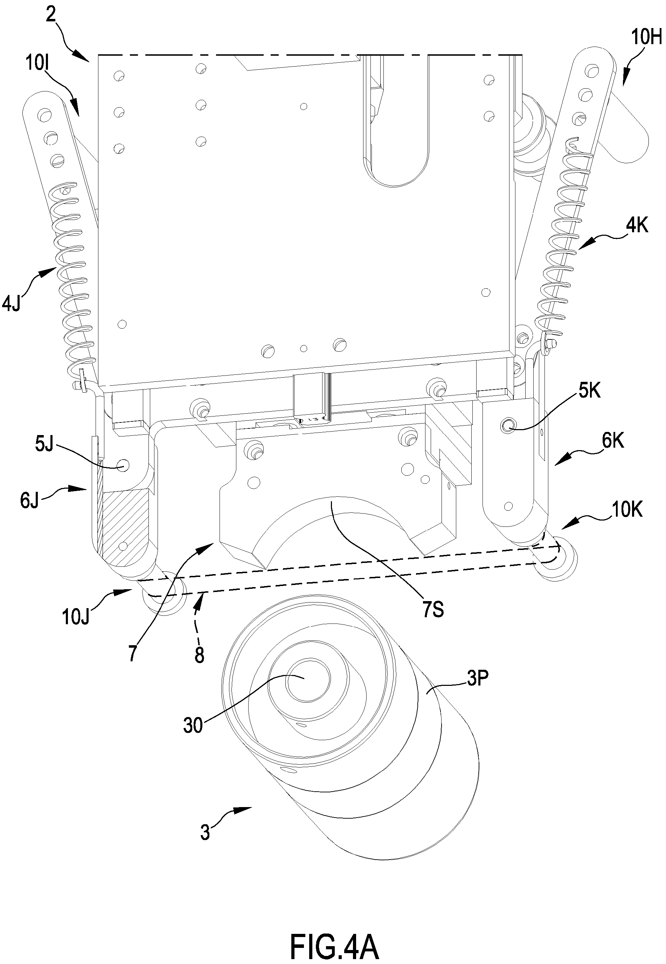

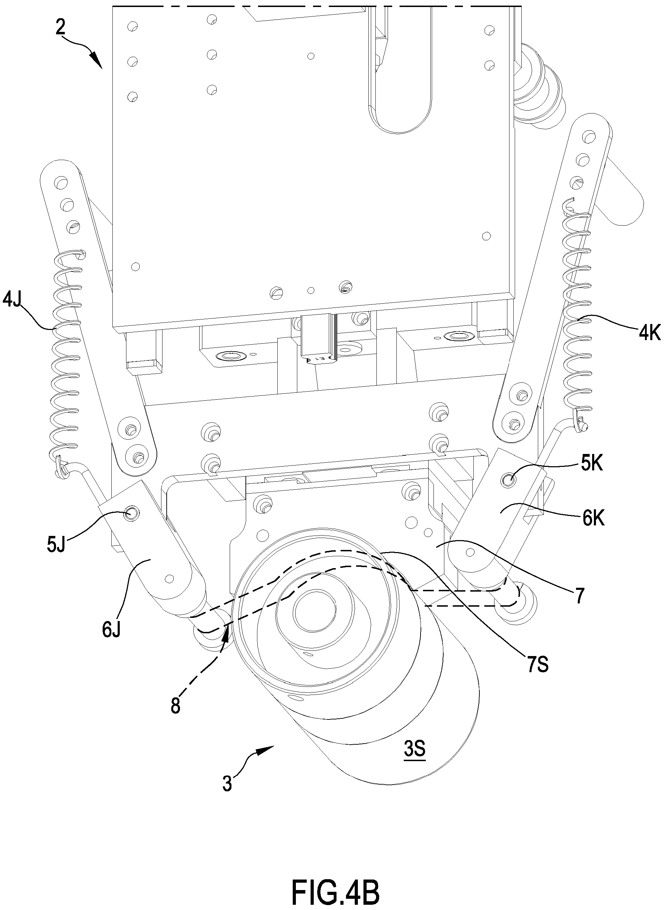

The switching of the first arm 6J and of the second arm 6K from their respective resting positions to their respective working positions takes place, preferably simultaneously, by virtue of a drawing force exerted by the second movement system on the belt 8. However, the switching of the first arm 6J and of the second arm 6K from their respective working positions to their respective resting positions takes place, preferably simultaneously, by virtue of an elastic force exerted on the first arm 6J and on the second arm 6K by respective thrust springs. In fact, when the belt 8 is drawn, the drawing force drawing the belt 8 exceeds the elastic force of the first spring 4J as well as the elastic force of the second spring 4K. The first arm 6J and the second arm 6K rotate about the first hinge 5J and the second hinge 5K, respectively, both moving closer to the head 7, so that the respective distances of both the first roller 10J and the second roller 10K from the head 7 decrease. From the arrangement of the components and the belt 8 shown in Figure 4A (corresponding to the position for detachment of the head 7) the machine 1 thus passes to the arrangement of the components and the belt 8 shown in Figure 4B (corresponding to the position of adjacency of the head 7). In any case, upon completion of the advancement of the belt 8, the first arm 6J and the second arm 6K remain in their respective working positions, for they are retained there by the pressure exerted by the work surface 7S of the head 7 on the external surface 3S of the support 3. In fact, the belt 8 is actually locked between the support 3 and the head 7 and as a result the first arm 6J and the second arm 6K cannot leave their respective working positions. However, when the head 7 returns to the detachment position, the elastic force of the first spring 4J and of the second spring 4K brings the first arm 6J and the second arm 6K back to their respective resting positions, thus bringing the procedure for recovery of the belt 8 to completion. From the arrangement of the components and the belt 8 shown in Figure 4B, the machine 1 thus returns to the arrangement of the components and the belt 8 shown in Figure 4A, simultaneously with the return of the head 7 from the position of adjacency to the detachment position.

The function of the procedure for recovery of the belt 8, which in itself constitutes an invention, is to prevent the fraction of the belt 8 pressed by the work surface 7S of the head 7 against the external surface 3S of the support 3 (with which it carries out the application of polymeric material 9' on the manufactured tubular article 9) from lacking an application thereon of the polymeric material 9', this polymeric material 9' having already been utilized for the preceding application. By virtue of the procedure for recovery of the belt 8, the latter appears as in Figure 9. The fraction of the belt 8 pressed by the work surface 7S of the head 7 against the external surface 3S of the support 3 is identified with a particular hatching pattern and it is of a length equal to x. Upstream of this fraction, polymeric material 9', such as polyurethane for example, is applied on the entire belt 8. Downstream of this fraction, fractions from which the polymeric material 9' has been removed during the preceding applications (and which are thus of a length equal to x) are alternated with fractions of the belt 8 with a length equal to y, in which the application of polymeric material 9' is instead still present. An optimal procedure for recovery of the belt 8 makes it possible to minimize the length y of the fractions of the belt 8 in which the application of polymeric material 9' is not utilized, until the length y is possibly brought to a value near or equal to zero.

The features described above in relation to the machine 1 as shown in Figure 3 apply to any machines 1 installed in the plant 100 as shown in Figure 1 and in Figure 2, preferably in relation to all the machines 1 installed in the plant 100 as shown in Figure 1 and Figure 2. In the plant 100 for applying polymeric material 9' (preferably polyurethane) to a manufactured tubular article 9 (preferably a textile article such as a stocking for example) as shown in Figure 1 and in Figure 2, the machines 1 are arranged in series. With the work surface 7S of the head 7 of each machine 1 having a section substantially in the form of an arc of a circle and S being the amplitude, expressed in degrees, of the angle defined by each arc of a circle, the number P of machines 1 is advantageously such that the parameter P*S/360 is comprised between 1 and 1.5, preferably between 1 and 1.2, and even more preferably between 1 and 1.1 (or exactly 1).

In the embodiment illustrated in Figure 1 and in Figure 2, by way of non-limiting explanation, in which the number of machines 1 is equal to three and the amplitude of the angle defined by the arc of a circle of the head 7 of each machine 1 is equal to 130°, the parameter P*S/360 is equal to about 1.08. The plant 100 is configured so that the heads 7 of the machines 1 take on their respective detachment and adjacency positions virtually simultaneously. Preferably, the plant 100 is programmed in such a manner that the machines 1 work synchronously with respect to each other, that is to say, they all perform the same phase of the work cycle virtually simultaneously.

In the plant 100 appearing in Figure 1 and Figure 2, the machines 1 are associated with a system for advancing the supports 3 that is suitable for enabling any one of these supports 3 to work progressively in combination with all the machines 1 in the plant 100. Advantageously, the machines 1 are substantially aligned with respect to each other in the plant 100, the direction of alignment being almost perpendicular to the planes of symmetry A of the work surfaces of the heads 7 of the machines 1. Advantageously, the heads 7 of the machines 1 are all found virtually at the same height. Advantageously, the direction of advancement of the supports 3, at least in the area in which these supports 3 cooperate with the machines 1, is perpendicular to the planes of symmetry A of the work surfaces of the heads 7 of the machines 1 (and therefore parallel to the direction of alignment of the machines 1 with respect to each other).The plant 100 can also comprise a station for the automatic loading of manufactured tubular articles 9 on the supports 3 and a station for the automatic retrieval of manufactured tubular articles 9 from the supports 3 (not illustrated in Figure 1 or in Figure 2), both stations being served by the system for advancing the supports 3. The station for the automatic loading of manufactured tubular articles 9 on the supports 3 is located upstream of the machines 1 along the direction of advancement of the supports 3, whereas the station for the automatic retrieval of manufactured tubular articles 9 from the supports 3 is located downstream of the machines 1 along the direction of advancement of the supports 3.

The advancement system is configured to alternate phases for advancement of the supports 3 with phases for stopping the supports 3. Advantageously, the plant 100 is programmed so that there is adequate synchronization between the advancement of the supports 3 and the work cycle of the machines 1. In particular, the switching of the position of each head 7 from the respective position for detachment to the respective position of adjacency takes place during a stopping phase. The stopping phase lasts for the entire duration of the process of applying the polymeric material 9' to the manufactured tubular article 9 and therefore until all the heads 7 of the machines 1 retreat at least by an amount such as to enable advancement of the supports 3.

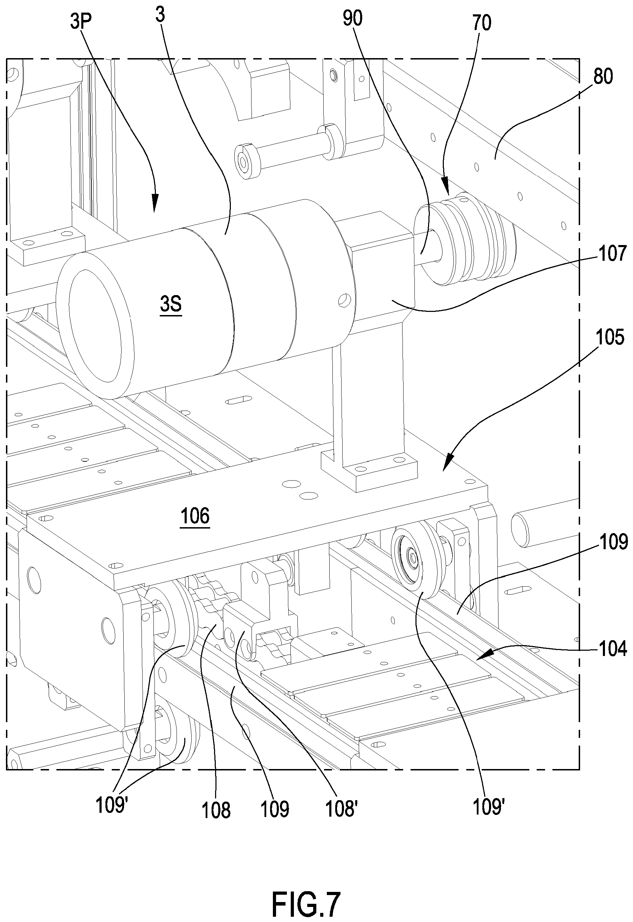

A detailed view of the plant 100 for applying polymeric material 9' to a manufactured tubular article 9 is illustrated in Figure 7, as it appears in an embodiment of the present invention. An additional detailed view of the embodiment of the plant 100 is illustrated in Figure 8.

Advantageously, each support 3 is transported by a respective carriage 105 that enables it to advance on the track 104 and to stop in predetermined positions in the plant 100, that is to say, at the machines 1 for applying polymeric material 9' to the manufactured tubular article 9. The carriage 105 has a base 106 that moves along the track 104 of the plant 100 and an upright 107 fixed to this base 106, to which the support 3 is constrained in an overhung manner. The track 104 is equipped with a drive chain 108 and with a pair of rails 109, the drive chain 108 having the function of advancing the supports 3 according to the controlling modes of the plant 100, the rails 109 serving instead to define the direction of advancement of the supports 3 with the required precision. To enable a carriage 105 (and with it the support 3 that is constrained to this carriage 105) to advance in a precise manner along the track 104, means for engaging a link in the drive chain 108 and guiding means that can slide along the rails 109 are advantageously applied to the base of the carriage 105. The engagement means can be configured in the form of a plate 108' hinged to the base of the carriage 105 which grasps a link in the drive chain 108, whereas the guiding means can be configured in the form of two opposite rows of rollers 109' fastened to the base of the carriage 105 and that roll over the rails 109. Advantageously, each support 3 can rotate about its own axis in a calibrated manner during the phases for advancement along the track 104.This rotation has the function of ensuring that at each stop of the support 3, the manufactured tubular article 9 is in an angular position suitable for enabling the machine 1 at which the support 3 is stopped to apply the polymeric material 9' accurately to the manufactured tubular article 9. In this manner, each machine 1 in the plant 100 is in charge of a different portion of the strip and the strip that is obtained on the surface of the manufactured tubular article 9 after it has been treated by all the machines 1 in the plant 100 is a continuous strip that has no gaps.

Therefore, advantageously the degree of rotation that each support 3 undergoes passing from one machine 1 to the next is determined as a function of the number of machines 1 installed in the plant 100. In particular, in the course of the advancement from one machine 1 to the next, the supports undergo a rotation by degrees equal to (360/P)+(360*V), where P is the number of machines 1 in the plant 100 and V is any whole number greater than or equal to zero. Therefore, should the plant 100 comprise three machines 1 installed in series, as in Figure 1 and in Figure 2, the supports 3 will undergo, between one machine 1 and the next, a rotation about their own axis of about 120°, or of about 480°, or of about 840°, or of about 1200°, or of about 1560°, and so forth.

For this purpose, on each upright 107, in the proximity of the end thereof furthest from the base of the carriage 105, a seat is afforded in which a shaft 90 coupled to the support 3 is free to rotate. Advantageously, to avoid the installation on each carriage 105 of an actuator suitable for setting the support 3 into rotation, a flywheel 70 (or guide roller) is associated with each support 3, this flywheel 70 being substantially coaxial with the support 3. The flywheel 70 is coupled to the same shaft 90 to which the support 3 is coupled, advantageously on the opposite side with respect to the upright 107, so as to obtain in this manner a balanced assembly and prevent a significant bending moment from acting on the upright 107. During advancement of the support 3 (that is, when the carriage 105 is advanced by the drive chain 108), the flywheel 70 rolls frictionally along a bar 80 that extends longitudinally and is fixed to the plant 100 in such a manner that the direction of extension of the bar 80 is substantially parallel to the direction of advancement of the support 3. The friction between the bar 80 and the flywheel 70 is adequately calibrated to obtain the desired rotation of the support 3 between one machine 1 and the next. Note that the translational movement of the track 104, which moves the carriages 105 bearing the supports 3, also determines an identical translational movement of the flywheels 70. Given that the latter roll along the bar 80 and transmit this rotation to their own support 3, overall a rotational-translational movement of the supports 3 is obtained, in which the translational movement (or advancement) and the rotational movement are perfectly synchronized with respect to each other. In this manner, each support reaches the various stations (and machines) presenting exactly the portion of its external surface on which the appropriate portion of the manufactured tubular article for receiving the polymeric material as an application is present.

Thus conceived, the invention is susceptible to numerous modifications and variants, all of which falling within the scope of the inventive concept and the components cited may be replaced with other technically equivalent elements.

The present invention is suited for use on new machines and plants, and on already existing machines and plants. The present invention offers important advantages. First of all, the invention makes it possible to overcome at least some of the drawbacks of the prior art.

Moreover, the present invention is capable of offering the technical advantages for which it has been conceived. In fact, the machine and the plant according to the present invention are capable of applying strips (or portions of strips) of polymeric material to a manufactured tubular article effectively and reliably, thus making the manufactured tubular article perfectly adherent when worn. In the specific case of self-supporting stockings, the non-slip or clinging strips realized by means of the machine and the plant according to the present invention are distinguishable because they enable the stockings to remain perfectly adherent to the leg and thus enable wearers to perform any type of movement without the risk of the stockings sliding down and thus creating unattractive and troublesome creases. Both the machine and the plant according to the present invention offer fast and efficient operation. Their productivity (in terms of the number of manufactured tubular articles treated in a predetermined period of time) is particularly high, with beneficial effects also extending to the economical aspect of the treatments performed. Furthermore, the significant degree of automation of the machine and the plant, by means of which all the manufactured tubular articles treated meet the same high quality standard, should be emphasized. Furthermore, the present invention makes it possible to obtain a machine and a plant that are capable of operating in an innovative manner compared to the technical solutions of the prior art.

## Claims

1. A machine (1) for applying polymeric material (9') to a manufactured tubular article comprising a support belt (8), said polymeric material (9') being inserted in said machine (1) in the form of an application on said support belt (8), said polymeric material (9') preferably being polyurethane and said manufactured tubular article (9) preferably being a textile article, said machine (1) further comprising:
- a support (3) for said manufactured tubular article (9);
- a head (7) configured to melt said polymeric material (9') so as to enable the application thereof on at least one portion of said manufactured tubular article (9), said head (7) comprising a curved work surface (7S), the geometry of the work surface (7S) of said head (7) being compatible with the geometry of the external surface (3S) of said support (3);
- a first movement system, configured to move said head (7) at least between a position for detachment from said support (3) and a position of adjacency to said support (3), **characterised in that** it further comprises
- a second movement system, configured to move said belt (8) along a predefined path, said path comprising a section interposed between said support (3) and said head (7),

2. The machine (1) according to claim 1, wherein the external surface (3S) of said support (3) and the work surface (7S) of said head (7) share a same plane of symmetry (A), and/or wherein the external surface (3S) of said support (3) in particular has a circular section and the work surface (7S) of said head (7) has a section in the form of an arc of a circle, and/or wherein the form of the work surface (7S) of the head (7) corresponds to a portion of the external surface (3S) of the support (3), and/or wherein the external surface (3S) of said support (3) and the work surface (7S) of said head (7) in particular have the same radius of curvature, and/or wherein the amplitude of the angle defined by said arc of a circle is particularly comprised between 90° and 180°, preferably comprised between 120° and 150°, and even more preferably equal to about 130°.

3. The machine (1) according to claim 2, wherein said first movement system is configured to move said head (7) with translational motion and wherein the translational movement of said head (7) from said position for detachment to said position of adjacency and the translational movement of said head (7) from said position of adjacency to said detachment position take place along a direction parallel to said plane of symmetry (A).

4. The machine (1) according to any one of the preceding claims, wherein:
- said second movement system comprises at least a first roller (10J) and a second roller (10K);
- said first roller (10J) and said second roller (10K) delimit the section of the path of said belt (8) interposed between said support (3) and said head (7) and they are connected to a structure that is solidly constrained to said head (7) by means of a first arm (6J) and a second arm (6K), respectively;
- said first arm (6J) and said second arm (6K) are articulated by means of a first hinge (5J) and a second hinge (5K), respectively, and
- said first hinge (5J) and said second hinge (5K) enable a predefined rotation of said first arm (6J) and of said second arm (6K), respectively,
and/or wherein said first hinge (5J) is configured in such a manner that said first arm (6J) takes on at least one resting position and at least one working position, the distance between said first roller (10J) and said head (7) in said resting position of said first arm (6J) being greater than the distance between said first roller (10J) and said head (7) in said working position of said first arm (6J), and wherein said second hinge (5K) is configured in such a manner that said second arm (6K) takes on at least one respective resting position and at least one respective working position, the distance between said second roller (10K) and said head (7) in said resting position of said second arm (6K) being greater than the distance between said second roller (10K) and said head (7) in said working position of said second arm (6K), and/or wherein said first movement system and said second movement system are configured in such a manner that said first arm (6J) and said second arm (6K) are found in their respective resting positions when said head (7) is found in said detachment position and in their respective working positions when said head (7) is found in said position of adjacency, and/or wherein the switching of said first arm (6J) and of said second arm (6K) from their respective resting positions to their respective working positions takes place, preferably simultaneously, by virtue of a drawing force exerted by said second movement system on said belt (8), and/or wherein the switching of said first arm (6J) and of said second arm (6K) from their respective working positions to their respective resting positions takes place, preferably simultaneously, by virtue of an elastic force exerted on said first arm (6J) and on said second arm (6K) by respective thrust springs.

5. The machine (1) according to any one of the preceding claims, wherein, when said head (7) is found in said position of adjacency, at least a fraction of the section of the belt (8) interposed between said support (3) and said head (7) is pressed by the work surface (7S) of said head (7) against the external surface (3S) of said support (3).

6. The machine (1) according to any one of the preceding claims, wherein said support (3) and said head (7) are removable and/or interchangeable, and/or wherein said support (3) is connected to a shaft and said support (3) rotates about the axis of said shaft, and/or wherein said support (3) is configured to take on a discrete number of stable angular positions, the stable angular positions of said support (3) being angularly equidistant with respect to each other, and/or wherein the number of stable angular positions of said support (3) is equal to three or greater than three.

7. The machine (1) according to any one of the preceding claims, wherein the work surface (7S) of said head (7) is smooth or wherein ridges and/or grooves are afforded on the work surface (7S) of said head (7) according to a predetermined pattern.

8. A plant (100) for applying polymeric material (9') to a manufactured tubular article (9), said plant (100) comprising a plurality of machines (1) according to any one of the preceding claims, the machines (1) being arranged in series, the work surface (7S) of the head (7) of each machine (1) having a section in the form of an arc of a circle, **characterized in that** there is a discrete number P of said machines (1) so that, S being the amplitude, expressed in degrees, of the angle defined by each arc of a circle, the parameter
P*S/360
is comprised between 1 and 1.5, preferably between 1 and 1.2, and even more preferably between 1 and 1.1, and/or wherein the number of machines (1) is equal to three, and/or wherein said plant (100) is configured so that the heads (7) of the machines (1) take on their respective detachment and adjacency positions virtually simultaneously.

9. The plant (100) according to claim 8, comprising a system for advancing the supports (3) that is suitable for enabling any one of these supports (3) to work progressively in combination with all the machines (1) in said plant (100), and/or wherein said advancement system is configured to alternate phases for advancement of the supports (3) with phases for stopping the supports (3) and to switch the position of each head (7) from the respective position for detachment to the respective adjacency position during said stopping phases, and/or wherein during the phases for advancement of these supports (3), the supports (3) rotate about their own axis, and/or wherein, in the course of the advancement from one machine (1) to the next, the supports (3) undergo in particular a rotation by degrees equal to (360/P)+(360*V), where P is the number of machines (1) in said plant (100) and V is any whole number greater than or equal to zero, and/or wherein a respective flywheel (70) is associated with each support (3), each flywheel (70) being coaxial with the support (3) with which it is associated, and wherein said plant comprises a bar (80), each flywheel (70) rolling frictionally along said bar (80).

10. The plant (100) according to claim 8 or 9, comprising, upstream of the machines (1), a station for the automatic loading of manufactured tubular articles (9) on the supports (3) and, downstream of the machines (1), a station for the automatic retrieval of the manufactured tubular articles (9) from the supports (3).

## Patentansprüche

1. Maschine (1) zum Aufbringen von Polymermaterial (9') auf einen hergestellten rohrförmigen Gegenstand, umfassend einen Tragegurt (8), wobei das Polymermaterial (9') in die Maschine (1) in der Form eines Aufbringens auf den Tragegurt (8) eingebracht wird, wobei das Polymermaterial (9') vorzugsweise Polyurethan ist und der hergestellte rohrförmige Gegenstand (9) vorzugsweise ein Textilgegenstand ist, wobei die Maschine (1) ferner umfasst:
- einen Träger (3) für den hergestellten rohrförmigen Gegenstand (9);
- einen Kopf (7), welcher dazu eingerichtet ist, das Polymermaterial (9') zu schmelzen, um so das Aufbringen davon auf wenigstens einen Bereich des hergestellten rohrförmigen Gegenstand (9) zu ermöglichen, wobei der Kopf (7) eine gekrümmte Arbeitsfläche (7S) umfasst, wobei die Geometrie der Arbeitsfläche (7S) des Kopfes (7) mit der Geometrie der Außenfläche (3S) des Trägers (3) kompatibel ist;
- ein erstes Bewegungssystem, welches dazu eingerichtet ist, den Kopf (7) wenigstens zwischen einer Position zum Lösen von dem Träger (3) und einer Position eines Angrenzens an den Träger (3) zu bewegen, **dadurch gekennzeichnet, dass** sie ferner umfasst:
- ein zweites Bewegungssystem, welches dazu eingerichtet ist, den Gurt (8) entlang eines vordefinierten Pfads zu bewegen, wobei der Pfad einen Abschnitt umfasst, welcher zwischen dem Träger (3) und dem Kopf (7) eingefügt ist.

2. Maschine (1) nach Anspruch 1, wobei die Außenfläche (3S) des Trägers (3) und die Arbeitsfläche (7S) des Kopfes (7) eine selbe Symmetrieebene (A) teilen, und/oder wobei die Außenfläche (3S) des Trägers (3) insbesondere einen kreisförmigen Querschnitt aufweist und die Arbeitsfläche (7S) des Kopfes (7) einen Querschnitt in Form eines Kreisbogens aufweist, und/oder wobei die Form der Arbeitsfläche (7S) des Kopfes (7) einem Bereich der Außenfläche (3S) des Trägers (3) entspricht, und/oder wobei die Außenfläche (3S) des Trägers (3) und die Arbeitsfläche (7S) des Kopfes (7) insbesondere denselben Krümmungsradius aufweisen, und/oder wobei die Amplitude des Winkels, welcher durch den Kreisbogen definiert ist, insbesondere zwischen 90° und 180° beträgt, vorzugsweise zwischen 120° und 150° beträgt und weiter bevorzugt gleich etwa 130° ist.

3. Maschine (1) nach Anspruch 2, wobei das erste Bewegungssystem dazu eingerichtet ist, den Kopf (7) mit einer Translationsbewegung zu bewegen und wobei die Translationsbewegung des Kopfes (7) von der Position zum Lösen zu der Position eines Angrenzens und die Translationsbewegung des Kopfes (7) von der Position eines Angrenzens zu der Löseposition entlang einer Richtung stattfinden, welche parallel zu der Symmetrieebene (A) ist.

4. Maschine (1) nach einem der vorhergehenden Ansprüche, wobei:
- das zweite Bewegungssystem wenigstens eine erste Rolle (10J) und eine zweite Rolle (10K) umfasst;
- die erste Rolle (10J) und die zweite Rolle (10K) den Abschnitt des Pfads des Gurts (8) begrenzen, welcher zwischen dem Träger (3) und dem Kopf (7) eingefügt ist, und wobei sie mit einer Struktur verbunden sind, welche mittels eines ersten Arms (6J) bzw. eines zweiten Arms (6K) fest an dem Kopf (7) gehaltert ist;
- der erste Arm (6J) und der zweite Arm (6K) mittels eines ersten Scharniers (5J) bzw. eines zweiten Scharniers (5K) gelenkig ausgebildet sind, und
- das erste Scharnier (5J) und das zweite Scharnier (5K) eine vordefinierte Rotation des ersten Arms (6J) bzw. des zweiten Arms (6K) erlauben,
und/oder wobei das erste Scharnier (5J) derart eingerichtet ist, dass der erste Arm (6J) wenigstens eine Ruheposition und wenigstens eine Arbeitsposition einnimmt, wobei die Distanz zwischen der ersten Rolle (10J) und dem Kopf (7) in der Ruheposition des ersten Arms (6J) größer als die Distanz zwischen der ersten Rolle (10J) und dem Kopf (7) in der Arbeitsposition des ersten Arms (6J) ist, und wobei das zweite Scharnier (5K) derart eingerichtet ist, dass der zweite Arm (6K) wenigstens eine entsprechende Ruheposition und wenigstens eine entsprechende Arbeitsposition einnimmt, wobei die Distanz zwischen der zweiten Rolle (10K) und dem Kopf (7) in der Ruheposition des zweiten Arms (6K) größer als die Distanz zwischen der zweiten Rolle (10K) und dem Kopf (7) in der Arbeitsposition des zweiten Arms (6K) ist, und/oder wobei das erste Bewegungssystem und das zweite Bewegungssystem derart eingerichtet sind, dass der erste Arm (6J) und der zweite Arm (6K) in ihren jeweiligen Ruhepositionen zu finden sind, wenn der Kopf (7) in der Löseposition zu finden ist, sowie in ihren jeweiligen Arbeitspositionen, wenn der Kopf (7) in der Position eines Angrenzens zu finden ist, und/oder wobei das Umschalten des ersten Arms (6J) und des zweiten Arms (6K) von ihren jeweiligen Ruhepositionen zu ihren jeweiligen Arbeitspositionen, vorzugsweise gleichzeitig, mittels einer Zugkraft stattfindet, welche durch das zweite Bewegungssystem auf den Gurt (8) ausgeübt wird, und/oder wobei das Umschalten des ersten Arms (6J) und des zweiten Arms (6K) von ihren jeweiligen Arbeitspositionen zu ihren jeweiligen Ruhepositionen, vorzugsweise gleichzeitig, mittels einer elastischen Kraft stattfindet, welche auf den ersten Arm (6J) und auf den zweiten Arm (6K) durch jeweilige Schubfedern ausgeübt wird.

5. Maschine (1) nach einem der vorhergehenden Ansprüche, wobei wenn der Kopf (7) in der Position eines Angrenzens zu finden ist, wenigstens ein Teil des Abschnitts des Gurts (8), welcher zwischen dem Träger (3) und dem Kopf (7) eingefügt ist, durch die Arbeitsfläche (7S) des Kopfs (7) gegen die Außenfläche (3S) des Trägers (3) gedrückt wird.

6. Maschine (1) nach einem der vorhergehenden Ansprüche, wobei der Träger (3) und der Kopf (7) lösbar und/oder austauschbar sind, und/oder wobei der Träger (3) mit einer Welle verbunden ist und der Träger (3) um die Achse dieser Welle rotiert, und/oder wobei der Träger (3) dazu eingerichtet ist, eine diskrete Anzahl von stabilen Winkelpositionen einzunehmen, wobei die stabilen Winkelpositionen des Trägers (3) gleich weit bezogen auf den Winkel beabstandet zueinander sind, und/oder wobei die Anzahl von stabilen Winkelpositionen des Trägers (3) gleich drei oder größer als drei ist.

7. Maschine (1) nach einem der vorhergehenden Ansprüche, wobei die Arbeitsfläche (7S) des Kopfes (7) glatt ist oder wobei Kerben und/oder Rillen an der Arbeitsfläche (7S) des Kopfes (7) gemäß einem vorbestimmten Muster vorgesehen sind.

8. Anlage (100) zum Aufbringen eines Polymermaterials (9') auf einen hergestellten rohrförmigen Gegenstand (9), wobei die Anlage (100) eine Mehrzahl von Maschinen (1) nach einem der vorhergehenden Ansprüche umfasst, wobei die Maschinen (1) in Reihe angeordnet sind, wobei die Arbeitsfläche (7S) des Kopfes (7) von jeder Maschine (1) einen Querschnitt in der Form eines Kreisbogens aufweist, **dadurch gekennzeichnet, dass** eine diskrete Anzahl P der Maschinen (1) vorliegt, so dass wobei S die Amplitude, ausgedrückt in Grad, des von jedem Kreisbogen definierten Winkels ist, der Parameter
P*S/360
Zwischen 1 und 1,5 beträgt, vorzugsweise zwischen 1 und 1,2 und weiter bevorzugt zwischen 1 und 1,1, und/oder wobei die Anzahl der Maschinen (1) gleich drei ist, und/oder wobei die Anlage (100) derart eingerichtet ist, dass die Köpfe (7) der Maschinen (1) ihre jeweiligen Löse- und Angrenzpositionen praktisch gleichzeitig einnehmen.

9. Anlage (100) nach Anspruch 8, umfassend ein System zum Vorschieben der Träger (3), welches dazu geeignet ist, es beliebigen dieser Träger (3) zu ermöglichen, fortschreitend in Kombination mit allen der Maschinen (1) in der Anlage (1) zu arbeiten, und/oder wobei das Vorschubsystem dazu eingerichtet ist, Phasen zum Vorschieben der Träger (3) mit Phasen zum Stoppen der Träger (3) abzuwechseln und die Position von jedem Kopf (7) von der entsprechenden Position zum Lösen zu der entsprechenden Angrenzposition während der Stoppphasen umzuschalten, und/oder wobei während der Phasen zum Vorschieben dieser Träger (3) die Träger (3) um ihre eigene Achse rotieren, und/oder wobei in dem Ablauf des Vorschiebens von einer Maschine (1) zu der nächsten die Träger (3) insbesondere eine Rotation um Grade gleich (360/P)+(360*V) durchlaufen, wobei P die Anzahl der Maschinen (1) in der Anlage (100) ist und V eine beliebige Ganzzahl größer oder gleich null ist, und/oder wobei ein jeweiliges Schwungrad (70) jedem Träger (3) zugeordnet ist, wobei jedes Schwungrad (70) koaxial mit dem Träger (3) ist, welchem es zugeordnet ist, und wobei die Anlage eine Stange (80) umfasst, wobei jedes Schwungrad (70) reibend entlang der Stange (80) rollt.

10. Anlage (100) nach Anspruch 8 oder 9, umfassend stromaufwärts der Maschinen (1) eine Station für das automatische Laden von hergestellten rohrförmigen Gegenständen (9) an den Trägern (3) und stromabwärts der Maschinen (1) eine Station für das automatische Erhalten der hergestellten rohrförmigen Gegenstände (9) von den Trägern (3).

## Revendications

1. Machine (1) d'application d'un matériau polymère (9') à un article tubulaire manufacturé comprenant une courroie de support (8), ledit matériau polymère (9') étant inséré dans ladite machine (1) sous la forme d'une application sur ladite courroie de support (8), dudit matériau polymère (9') étant préférablement du polyuréthane et ledit article tubulaire manufacturé (9) étant préférablement un article textile, ladite machine (1) comprenant en outre :
- un support (3) pour ledit article tubulaire manufacturé (9) ;
- une tête (7) conçue pour faire fondre ledit matériau polymère (9') afin de permettre son application sur au moins une portion dudit article tubulaire manufacturé (9), ladite tête (7) comprenant une surface de travail (7S) incurvée, la géométrie de la surface de travail (7S) de ladite tête (7) étant compatible avec la géométrie de la surface externe (3S) dudit support (3) ;
- un premier système de mouvement, conçu pour déplacer ladite tête (7) au moins entre une position de détachement depuis ledit support (3) et une position de contiguïté par rapport audit support (3), **caractérisé en ce qu'**il comprend en outre
- un second système de mouvement, conçu pour déplacer ladite courroie (8) le long d'un trajet prédéfini, ledit trajet comprenant une section interposée entre ledit support (3) et ladite tête (7).

2. Machine (1) selon la revendication 1, la surface externe (3S) dudit support (3) et la surface de travail (7S) de ladite tête (7) partageant un même plan de symétrie (A), et/ou la surface externe (3S) dudit support (3) en particulier ayant une section circulaire et la surface de travail (7S) de ladite tête (7) ayant une section sous la forme d'un arc de cercle, et/ou la forme de la surface de travail (7S) de la tête (7) correspondant à une portion de la surface externe (3S) du support (3), et/ou la surface externe (3S) dudit support (3) et la surface de travail (7S) de ladite tête (7) en particulier ayant le même rayon de courbure, et/ou l'amplitude de l'angle défini par ledit arc d'un cercle étant particulièrement comprise entre 90° et 180°, préférablement comprise entre 120° et 150°, et même plus préférablement égale à environ 130°.

3. Machine (1) selon la revendication 2, ledit premier système de mouvement étant conçu pour déplacer ladite tête (7) selon un mouvement de translation et le mouvement de translation de ladite tête (7) depuis ladite position pour le détachement vers ladite position de contiguïté et le mouvement de translation de ladite tête (7) depuis ladite position de contiguïté de ladite position de détachement ayant lieu le long d'un sens parallèle audit plan de symétrie (A).

4. Machine (1) selon l'une quelconque des revendications précédentes :
- ledit second système de mouvement comprenant au moins un premier rouleau (10J) et un second rouleau (10K) ;
- ledit premier rouleau (10J) et ledit second rouleau (10K) délimitant la section du trajet de ladite courroie (8) interposée entre ledit support (3) et ladite tête (7) et étant reliés à une structure qui est solidement contrainte à ladite tête (7) à l'aide d'un premier bras (6J) et d'un second bras (6K), respectivement ;
- ledit premier bras (6J) et ledit second bras (6K) étant articulés à l'aide d'une première charnière (5J) et d'une seconde charnière (5K), respectivement, et
- ladite première charnière (5J) et ladite seconde charnière (5K) permettant une rotation prédéfinie dudit premier bras (6J) et dudit second bras (6K), respectivement, et/ou ladite première charnière (5J) étant conçue d'une manière telle que ledit premier bras (6J) prend au moins une position de repos et au moins une position de travail, la distance entre ledit premier rouleau (10J) et ladite tête (7) dans ladite position de repos dudit premier bras (6J) étant plus grande que la distance entre ledit premier rouleau (10J) et ladite tête (7) dans ladite position de travail dudit premier bras (6J), et ladite seconde charnière (5K) étant conçue d'une manière telle que ledit second bras (6K) prend au moins une position de repos respective et au moins une position de travail respective, la distance entre ledit second rouleau (10K) et ladite tête (7) dans ladite position de repos dudit second bras (6K) étant supérieure à la distance entre ledit second rouleau (10K) et ladite tête (7) dans ladite position de travail dudit second bras (6K), et/ou ledit premier système de mouvement et ledit second système de mouvement étant conçus d'une manière telle que ledit premier bras (6J) et ledit second bras (6K) se trouvent dans leurs positions de repos respectives lorsque ladite tête (7) se trouve dans ladite position de détachement et dans leurs positions de travail respectives lorsque ladite tête (7) est trouvée dans ladite position de contiguïté, et/ou le basculement dudit premier bras (6J) et dudit second bras (6K) depuis leurs positions de repos respectives vers leurs positions de travail respectives a lieu, préférablement simultanément, en vertu d'une force de traction exercée par ledit second système de mouvement sur ladite courroie (8), et/ou le basculement dudit premier bras (6J) et dudit second bras (6K) depuis leurs positions de travail respectives vers leurs positions de repos respectives a lieu, préférablement simultanément, en vertu d'une force élastique exercée sur ledit premier bras (6J) et ledit second bras (6K) par des ressorts de poussée respectifs.

5. Machine (1) selon l'une quelconque des revendications précédentes, lorsque ladite tête (7) se trouve dans ladite position de contiguïté, au moins une fraction de la section de la courroie (8) interposée entre ledit support (3) et ladite tête (7) est pressée par la surface de travail (7S) de ladite tête (7) contre la surface externe (3S) dudit support (3).

6. Machine (1) selon l'une quelconque des revendications précédentes, ledit support (3) et ladite tête (7) étant mobiles et/ou interchangeables, et/ou ledit support (3) étant relié à un arbre et ledit support (3) tournant autour de l'axe dudit arbre, et/ou ledit support (3) étant conçu pour prendre un nombre discret de positions angulaires stables, les positions angulaires stables dudit support (3) étant équidistantes de manière angulaire l'une par rapport à l'autre, et/ou le nombre de positions angulaires stables dudit support (3) étant égal à trois ou plus que trois.

7. Machine (1) selon l'une quelconque des revendications précédentes, la surface de travail (7S) de ladite tête (7) étant lisse ou des crêtes et/ou des rainures étant permises sur la surface de travail (7S) de ladite tête (7) en fonction d'un motif prédéterminé.

8. Installation (100) d'application d'un matériau polymère (9') à un article tubulaire manufacturé (9), ladite installation (100) comprenant une pluralité de machines (1) selon l'une quelconque des revendications précédentes, les machines (1) étant disposées en série, la surface de travail (7S) de la tête (7) de chaque machine (1) ayant une section sous la forme d'un arc de cercle, **caractérisée en ce qu'**il existe un nombre discret P desdites machines (1) de sorte que, S étant l'amplitude, exprimée en degrés, de l'angle défini par chaque arc d'un cercle, le paramètre
P*S/360
étant compris entre 1 et 1,5, préférablement entre 1 et 1,2, et même plus préférablement entre 1 et 1,1, et/ou le nombre de machines (1) étant égal à trois, et/ou ladite installation (100) étant conçue de sorte que les têtes (7) des machines (1) prennent leurs positions de détachement et de contiguïté respectives simultanément virtuellement.

9. Installation (100) selon la revendication 8, comprenant un système d'avancée des supports (3) qui convient pour permettre à l'un quelconque de ces supports (3) de fonctionner progressivement en combinaison avec toutes les machines (1) dans ladite installation (100), et/ou ledit système de progression étant conçu pour alterner les phases de progression des supports (3) avec des phases d'arrêt des supports (3) et pour basculer la position de chaque tête (7) depuis la position respective pour le détachement vers la position de contiguïté respective durant lesdites phases d'arrêt, et/ou durant les phases de progression de ces supports (3), les supports (3) tournant autour de leur axe propre, et/ou, dans le cours de leur progression d'une machine (1) à l'autre, les supports (3) subissant en particulier une rotation par degrés égaux à (360/P) + (360*V), où P est le nombre de machines (1) dans ladite installation (100) et V est un nombre entier quelconque supérieur ou égal à zéro, et/ou un volant (70) respectif étant associé à chaque support (3), chaque volant (70) étant coaxial avec le support (3) auquel il est associé, et ladite installation comprenant une barre (80), chaque volant (70) roulant par friction le long de ladite barre (80).

10. Installation (100) selon la revendication 8 ou 9, comprenant, en amont des machines (1), un poste de charge automatique d'articles tubulaires manufacturés (9) sur les supports (3) et, en aval des machines (1), un poste de récupération automatique des articles tubulaires manufacturés (9) depuis les supports (3).
